# EUROPÄISCHE PATENTANMELDUNG

(11) **EP 3 970 901 A1**
(43) Veröffentlichungstag der Anmeldung: **23.03.2022**
(21) Anmeldenummer: 20196939.1
(22) Anmeldetag: 18.09.2020
(51) Int. Cl.: B23K 26/14, B08B 7/02, B08B 9/023, B22F 10/20, B22F 12/00, B23K 26/342, B23K 26/70, B23K 37/00

(54) **REINIGUNGSVORRICHTUNG, ADDITIVE FERTIGUNGSMASCHINE UND REINIGUNGSVERFAHREN UNTER VERWENDUNG VON EINEM EINE KOPPELFLÄCHE AUFWEISENDEN SCHWINGUNGSERZEUGER**

(71) Anmelder: Siemens Aktiengesellschaft, 80333 München (DE)
(72) Erfinder: Schneider, Heinz-Ingo, 85598 Baldham (DE)

(57) **Zusammenfassung**

Die Erfindung betrifft eine Reinigungsvorrichtung (1) zur Reinigung eines Düsenkopfes (2) für eine additive Fertigung eines Bauteils mittels Laser-Auftragsschweißen, mit einem Schwingungserzeuger (4), wobei der Schwingungserzeuger (4) eine Koppelfläche (5) aufweist und mittels der Koppelfläche (5) mit einem ersten Düsenausgang (6) einer Materialdüse (7) des Düsenkopfes (2) koppelbar ist, der Düsenkopf (2) mittels des Schwingungserzeugers (4) auf Basis einer elektrischen Schwingung in eine mechanische Schwingung (8) versetzbar ist und mittels der mechanischen Schwingung (8) der Düsenkopf (2) mit der Materialdüse (7) von einem bei der additiven Fertigung des Bauteils erzeugbaren Fertigungsrückstand gereinigt werden kann. Die Erfindung betrifft ebenfalls eine additive Fertigungsmaschine (30) mit der Reinigungsvorrichtung (1) und ein Reinigungsverfahren (34) für die Reinigungsvorrichtung (1) .

## Beschreibung

Die Erfindung betrifft eine Reinigungsvorrichtung zur Reinigung eines Düsenkopfes für eine additive Fertigung eines Bauteils mittels Laser-Auftragsschweißen. Die Erfindung betrifft ebenfalls eine additive Fertigungsmaschine mit der Reinigungsvorrichtung und ein Reinigungsverfahren für die Reinigungsvorrichtung.

Bei einem als additives Fertigungsverfahren im Kontext von 3D-Druck/ Additive Manufacturing (AM) bekanntem Laser-Auftragsschweißen, auch bezeichnet als Laser-Pulver-Auftragsschweißen (LPA), Directed Energy Deposition (DED) oder Laser Metal Deposion (LMD), wird zur Fertigung eines Bauteils mittels einer Materialdüse und eines Lasers einer Laserdüse ein Schweißmaterial, insbesondere Pulver oder Granulat, schichtweise aufgetragen und unter Aufwendung der Laserenergie des Lasers verschweißt.

So wird zum Beispiel auch ein Schmelzpulver meist mittels eines Gases, welches auch als Schutzgas für Schweißprozesse bekannt ist, durch die oft speziell für den jeweiligen Fertigungsprozess des Bauteils ausgeformte Materialdüse der Fertigung zugeführt.

Während des Fertigungsprozesses kann es öfters vorkommen, dass sich ein an der Materialdüse anhaftender Fertigungsrückstand des Pulvers bildet und so zum Beispiel bei Verwendung einer Ringspaltdüse als Materialdüse eine zumindest partielle Verstopfung eintritt.

Die Ursachen dafür können vielfältig sein und reichen von beispielsweise zu feuchtem Pulver, einer nicht angemessenen Kornfraktion und falschen Prozessparametern beim Fertigungsprozess bis hin zu während des Fertigungsprozesses ungewollt aufgewirbeltem Pulver.

Das Verstopfen der Materialdüse führt im Allgemeinen zu Beeinträchtigungen des Fertigungsprozesses, wobei oft der Pulverfokus nicht mehr ausreichend gut ausgebildet werden kann, die Pulverförderrate vom Sollwert abweichen kann oder auch die Laserstrahlung des Lasers beeinträchtigt werden kann.

Zumindest die Ursachen dieser Störungen im Fertigungsprozess können mittels z.B. eines Kamerasystems oder eines anderen geeigneten Detektierungssystems oft ermittelt werden. Die so ermittelten Störungsursachen beeinträchtigen den industriellen Einsatz einer entsprechenden Fertigungsmaschine aufgrund von geforderten hohen Durchsatzzeiten und Qualitätsanforderungen bei der Fertigung des Bauteils stark.

Die Störung kann dazu führen, dass der Fertigungsprozess oftmals abrupt unterbrochen und das zu fertigende Bauteil aus Sicht qualitativer Anforderungen als Ausschuss aussortiert werden muss, was eine Wiederholung des gesamten Fertigungsprozesses für das zu fertigende Bauteil nach sich zieht.

Auch können sich die beschriebenen Störungen negativ auf die ursprünglich eingestellt Funktionalität der additiven Fertigungsmaschine auswirken, wobei die Fertigungsmaschine durch nicht vollständig entfernbare oder entfernte Fertigungsrückstände, und damit einhergehend oft bestehenbleibende Langzeitschäden, aufwendig neu eingestellt oder zumindest angepasst werden muss.

Zum Beheben der Störungsursachen muss die Düseneinheit, zumindest der Düsenkopf, manuell demontiert, gereinigt und ggf. neu kalibriert werden. Hierfür wird der Fertigungsprozess gestoppt, was zumindest einen Produktionsausfall für die Dauer der Servicemaßnahmen nach sich zieht.

Dies kann sich demnach nicht nur negativ auf die Qualität des zu fertigenden Bauteils auswirken, sondern beeinträchtigt grundsätzlich auch die Verfügbarkeit und die Produktivität der Fertigungsmaschine.

Der Erfindung liegt daher die Aufgabe zugrunde, eine Reinigungsvorrichtung, eine additive Fertigungsmaschine mit der Reinigungsvorrichtung und ein Reinigungsverfahren für die Reinigungsvorrichtung vorzuschlagen, mittels derer ein Düsenkopf zur additiven Fertigung eines Bauteils für die Vermeidung von Störungen des Fertigungsprozesses gegenüber dem Stand der Technik verbessert gereinigt werden kann.

Die Aufgabe wird durch eine Reinigungsvorrichtung mit den in Anspruch 1 angegebenen Merkmalen, durch eine additive Fertigungsmaschine mit den in Anspruch 12 angegebenen Merkmalen und durch ein Reinigungsverfahren mit den in Anspruch 14 angegebenen Merkmalen gelöst.

Für die Lösung der Aufgabe wird eine Reinigungsvorrichtung zur Reinigung eines Düsenkopfes für eine additive Fertigung eines Bauteils mittels Laser-Auftragsschweißen mit einem Schwingungserzeuger vorgeschlagen, wobei der Schwingungserzeuger eine Koppelfläche aufweist und mittels der Koppelfläche mit einem ersten Düsenausgang einer Materialdüse des Düsenkopfes koppelbar ist, mittels des Schwingungserzeugers der Düsenkopf auf Basis einer elektrischen Schwingung in eine mechanische Schwingung versetzbar ist und der Düsenkopf mit der Materialdüse mittels der mechanischen Schwingung von einem bei der additiven Fertigung des Bauteils erzeugbaren Fertigungsrückstand gereinigt werden kann.

Der Schwingungserzeuger ist in vorteilhafter Weise ausgebildet, mittels Übertragung der mechanischen Schwingung via der Koppelfläche den ersten Düsenausgang der Materialdüse des Düsenkopfes zum Schwingen anzuregen. Ein sich daraufhin einstellendes Losbrechmoment zum Losbrechen des Fertigungsrückstands erzeugt am Düsenkopf eine entsprechende Reinigungswirkung.

Die Entfernung des Fertigungsrückstands ist auch innerhalb der Materialdüse mittels der mechanischen Schwingung des Schwingungserzeugers möglich.

Insbesondere ist eine Erzeugung einer Resonanzschwingung zwischen dem Schwingungserzeuger und dem Düsenkopf vorteilhaft, indem der Düsenkopf mit einer Resonanzfrequenz oder einem Vielfachen der Resonanzfrequenz angeregt wird, so dass sich das Losbrechmoment für den Fertigungsrückstand schnell und zuverlässig einstellt.

Die Reinigungsvorrichtung kann vor, während oder nach einem Fertigungsprozess der additiven Fertigung des Bauteils mit dem Düsenkopf in einer ersten Koppelausrichtung gekoppelt werden.

Der Düsenkopf ist beispielsweise Teil einer additiven Fertigungsmaschine für das Laser-Auftragsschweißen. Die Fertigungsrückstände können meist auf ein Pulver zurückzuführen sein, welches als Fertigungsmaterial, hier als Schweißmaterial, im Fertigungsprozess über die Materialdüse des Düsenkopfes zur Fertigung des Bauteils schichtweise aufgetragen wird und von dem beispielsweise in der Materialdüse unerwünschte Materialreste verbleiben.

Die Reinigung der Materialdüse des Düsenkopfes kann gegenüber dem sich dort bildenden oder gebildeten Fertigungsrückstand des Fertigungsprozesses proaktiv, aktiv oder reaktiv erfolgen.

Ist der Fertigungsrückstand, in dem für den störungsfreien Fertigungsprozess ausreichenden Maße entfernt, und somit eine eventuelle Störung des Fertigungsprozesses behoben oder vermieden worden, kann die Reinigungsvorrichtung von dem Düsenkopf wieder entkoppelt werden.

Die derart vorteilhaft durchgeführte Reinigung mittels der Reinigungsvorrichtung liegt bevorzugt in einem Zeitkorridor von Sekunden oder wenigen Minuten, insbesondere von bis zu 2 Minuten. Eine herkömmliche Reinigung mit manuell notwendigen Handlungen wie Demontage und Reinigung des Düsenkopfes, einer gegebenenfalls erforderlichen neuen Einstellung des Düsenkopfes und eventuell einer Neu-/ Wiederinbetriebnahme des Fertigungsprozesses erfordert hingegen meist einen Zeitumfang von 60 Minuten und mehr.

Da mittels der Reinigungsvorrichtung, in Abstimmung mit dem Fertigungsprozess, die Reinigung in kürzester Zeit und aufwandsarm durchgeführt werden kann, sind Fertigungsrückstände an der Materialdüse des Düsenkopfes, wie auch grundsätzlich am Düsenkopf, effizient und ohne wesentliche Beeinträchtigung des Fertigungsprozesses entfernbar.

Die Reinigungsvorrichtung hat daher in vorteilhafter Weise Einfluss auf eine erhöhte Fertigungsqualität des Bauteils, da entfernte Fertigungsrückstände keine Verunreinigungen am gefertigten Bauteil und keine Fertigungsfehler hervorrufen können.

Auch steigt mit der Reinigungsvorrichtung Verfügbarkeit und Wirkungsgrad des Düsenkopfes, was den Fertigungsprozess der additiven Fertigungsmaschine mit dem Düsenkopf insgesamt effizienter und störungsfreier macht.

Vorteilhafte Ausgestaltungsformen der Abtrennvorrichtung sind in den abhängigen Ansprüchen angegeben.

Bei einer ersten vorteilhaften Ausgestaltungsform der Reinigungsvorrichtung ist der Schwingungserzeuger mittels der Koppelfläche mit einem zweiten Düsenausgang einer Laserdüse des Düsenkopfes koppelbar und kann der Düsenkopf mit der Laserdüse mittels der mechanischen Schwingung von dem bei der additiven Fertigung des Bauteils erzeugbaren Fertigungsrückstand gereinigt werden.

Auch die Laserdüse, welche während des Fertigungsprozesses das von der Materialdüse schichtweise aufgetragene Fertigungsmaterial durch einen Laserstrahl verschweißt, kann in ihrer Funktionalität vom Fertigungsrückstand des Fertigungsmaterials zumindest beeinträchtigt werden. Daher trägt auch die Reinigung der Laserdüse in vorteilhafter Weise dazu bei, die Fertigungsqualität des Bauteils zu erhöhen.

Die Entfernung des Fertigungsrückstands ist auch innerhalb der Laserdüse mittels der mechanischen Schwingung des Schwingungserzeugers möglich.

Bei einer ersten vorteilhaften Ausgestaltungsform der Reinigungsvorrichtung sind die elektrische Schwingung und die mechanische Schwingung vom Schwingungserzeuger als Ultraschallschwingungen insbesondere in einem Frequenzbereich von 15kHz bis 60kHz erzeugbar.

Hochfrequente Schwingung an der Materialdüse und auch der Laserdüse, wie die mittels Ultraschalls, verbessern vorteilhaft das Losbrechen des Fertigungsrückstands des Fertigungsmaterials, insbesondere bei Erreichen der Resonanzschwingung zwischen dem Schwingungserzeuger und dem Düsenkopf im Frequenzbereich 15kHz bis 60kHz.

Bei einer weiteren vorteilhaften Ausgestaltungsform der Reinigungsvorrichtung weist der Schwingungserzeuger einen elektrischen Schwingungsgenerator zur Erzeugung der elektrischen Schwingung und einen Schwingungskonverter zur Umwandlung der elektrischen Schwingung in die mechanische Schwingung auf.

Der mittels elektrischer Energie betreibbare elektrische Schwingungsgenerator stellt in vorteilhafter Weise die elektrische Schwingung für den Schwingungskonverter auch als variabel einstellbare elektrische Schwingung bereit. Der Schwingungskonverter ist daher auch ausgebildet, diese variable einstellbare elektrische Schwingung derart in die mechanische Schwingung zu wandeln, dass die mechanische Schwingung, der elektrischen Schwingung folgend, also ebenfalls variabel ist.

Für die Umwandlung der elektrischen Schwingung in die mechanische Schwingung können bei Schwingungskonvertern beispielsweise die Wirkungsprinzipien der Piezoelektrizität oder der Magnetostriktion zum Einsatz kommen.

Bei einer weiteren vorteilhaften Ausgestaltungsform der Reinigungsvorrichtung weist der Schwingungserzeuger einen mechanischen Schwingungstransformator zur Veränderung einer Schwingungsamplitude der mechanischen Schwingung insbesondere für einen Amplitudenbereich von lpm bis 40pm auf.

Die Veränderung der Schwingungsamplitude kann insbesondere in Abhängigkeit der Frequenz der mechanischen Schwingung das Losbrechmoment des Fertigungsrückstands verstärken oder schwächen. Diese Variabilität ist dann beispielsweise vorteilhaft, falls das jeweilige Fertigungsmaterial für die Fertigung des Bauteils, und somit auch der jeweilige Fertigungsrückstand, aus unterschiedlichen Materialien besteht, wobei unterschiedliche Kräfte für die Entfernung des jeweiligen Fertigungsrückstands wirken müssen.

Bei einer weiteren vorteilhaften Ausgestaltungsform der Reinigungsvorrichtung weist der Schwingungserzeuger eine mechanische Koppeleinheit auf und ist die mechanische Koppeleinheit ausgebildet, an der Koppelfläche die mechanische Schwingung von dem Schwingungskonverter und, falls vorhanden, über den mechanischen Schwingungstransformator an den ersten Düsenausgang der Materialdüse des Düsenkopfes und, falls vorhanden, an den zweiten Düsenausgang der Laserdüse des Düsenkopfes zu übertragen.

Mittels der mechanischen Koppeleinheit kann in vorteilhafter Weise die Kopplung über die Koppelfläche des Schwingungserzeugers zum ersten Düsenausgang der Materialdüse und auch zum zweiten Düsenausgang der Laserdüse des Düsenkopfes hergestellt werden, wobei die mechanische Schwingung in den Düsenkopf einleitbar und der Fertigungsrückstand entfernbar ist.

Bei einer weiteren vorteilhaften Ausgestaltungsform der Reinigungsvorrichtung ist die mechanische Koppeleinheit als eine Sonotrode ausgebildet.

Die Sonotrode ist ein Werkzeug, welches insbesondere in Bezug auf die Bauform des Düsenkopfes und die Wirksamkeit der mechanischen Schwingung im Bereich des ersten Düsenausgangs der Materialdüse und des zweiten Düsenausgangs der Laserdüse zur gezielten Einleitung der mechanischen Schwingung ausgewählt werden kann.

Der Einsatz von Sonotroden ist beispielsweise auch bekannt beim Ultraschallschweißen oder beim Ultraschallschwingläppen (Ultraschallbohren).

Bei einer weiteren vorteilhaften Ausgestaltungsform der Reinigungsvorrichtung weist der Schwingungserzeuger eine erste Absaugvorrichtung und/oder eine erste Ausblasvorrichtung auf, ist die erste Absaugvorrichtung und/oder die erste Ausblasvorrichtung über die Koppelfläche mit dem ersten Düsenausgang der Materialdüse koppelbar, ist die erste Absaugvorrichtung zum Absaugen des bei der additiven Fertigung des Bauteils erzeugbaren Fertigungsrückstands an der Materialdüse ausgebildet und ist die erste Ausblasvorrichtung zum Ausblasen des bei der additiven Fertigung des Bauteils erzeugbaren Fertigungsrückstands an der Materialdüse ausgebildet.

Der Reinigungsprozess umfasst auch eine vorteilhafte Unterstützung beim Abtransport des Fertigungsrückstands mittels der Reinigungsvorrichtung, indem der Fertigungsrückstand permanent oder in Intervallen mittels der ersten Absaugvorrichtung von und aus der Materialdüse und der Laserdüse absaugbar ist oder der Fertigungsrückstand permanent oder in Intervallen mittels der ersten Ausblasvorrichtung von und aus der Materialdüse und der Laserdüse ausblasbar ist. Eine Kombination von Absaugen und Ausblasen ist dazu in vorteilhafter Weise möglich.

Bei einer weiteren vorteilhaften Ausgestaltungsform der Reinigungsvorrichtung weist die Reinigungsvorrichtung eine Reinigungsbürste mit einem antreibbaren Bürstenkopf auf, wobei der Bürstenkopf derart ausgebildet ist, mittels mechanischer Reibung den bei der additiven Fertigung des Bauteils erzeugbaren Fertigungsrückstand am ersten Düsenausgang der Materialdüse und, falls vorhanden, am zweiten Düsenausgang der Laserdüse des Düsenkopfes zu reinigen.

Zur Ankopplung der Reinigungsbürste am ersten Düsenausgang der Materialdüse und am zweiten Düsenausgang der Laserdüse des Düsenkopfes ist der Schwingungserzeuger von dem Düsenkopf entkoppelt. Analog dazu ist zur Ankopplung des Schwingungserzeuger an den Düsenkopf die Reinigungsbürste vom Düsenkopf entkoppelt.

Somit sind die Reinigungsbürste und der Schwingungserzeuger am Düsenkopf nicht für einen gleichzeitigen Betrieb vorgesehen.

Zum Entfernen des Fertigungsrückstands kann der bewegbare Bürstenkopf der Reinigungsbürste beispielsweise in eine rotierende oder eine vibrierende Bewegung versetzt werden.

Borsten der Reinigungsbürste sind insbesondere aus Kunststoff aber auch aus Metallen ausgebildet. Eine Materialhärte der Borsten wird dabei so ausgelegt, dass eine Beschädigung oder Abnutzung des Düsenkopfes, insbesondere am ersten Düsenausgang der Materialdüse und am zweiten Düsenausgang der Laserdüse, möglichst verhindert wird.

Ist beispielsweise die Materialdüse des Düsenkopfes insbesondere als Ringspaltdüse ausgebildet, kann der Bürstenkopf derart geformt sein, dass die Borsten in die Materialdüse eindringen können und den Fertigungsrückstand auch innerhalb der Materialdüse entfernen können.

Die Reinigungsbürste kann bevorzugt zur unterstützenden Reinigung für die Reinigung mit dem Schwingungserzeuger eingesetzt werden, wobei die unterstützende Reinigung eine Vorreinigung, eine Zwischenreinigung aber auch eine Nachreinigung sein kann.

Bei einer weiteren vorteilhaften Ausgestaltungsform der Reinigungsvorrichtung weist die Reinigungsvorrichtung eine Überwachungsvorrichtung zur Überwachung der Reinigung des Düsenkopfes auf.

Die Überwachungsvorrichtung kann insbesondere eine Anhaftung des Fertigungsrückstands am Düsenkopf aber auch eine Verstopfung der Materialdüse oder der Laserdüse mit dem Fertigungsrückstand detektiert und so den Einsatz der Reinigung mittels der Reinigungsdüse auslösen.

Auch kann die Überwachungsvorrichtung Analyse- und Vermessungskomponenten aufweisen, welche zur Analyse der Qualität des Fertigungsmaterials, zur Fokussierung des Fertigungsmaterials während des Fertigungsprozesses und zur Vermessung der Düsenlage einsetzbar sind.

Bei einer weiteren vorteilhaften Ausgestaltungsform der Reinigungsvorrichtung weist der Schwingungserzeugers an der Koppelfläche einen Koppelpuffer auf und ist die Koppelfläche über den Koppelpuffer mit dem ersten Düsenausgang der Materialdüse des Düsenkopfes und, falls vorhanden, mit dem zweiten Düsenausgang der Laserdüse des Düsenkopfes koppelbar.

Der Koppelpuffer dient der Vermeidung von durch die mechanische Schwingung hervorrufbaren Beschädigungen sowohl am Düsenkopf wie auch am Schwingungserzeuger. Besonders Kunststofffolie hat sich als Koppelpuffer bewährt. Denkbar sind aber auch andere Koppelmaterialen bzw. Koppelkörper wie Kunststoffkissen verschiedener Härte oder auch Metallplättchen aus einem eher weichen Metall wie Kupfer oder Aluminium.

Für die Lösung der Aufgabe wird weiterhin eine additive Fertigungsmaschine zur additiven Fertigung eines Bauteils mittels Laser-Auftragsschweißen mit der erfindungsgemäßen Reinigungsvorrichtung vorgeschlagen, aufweisend den Düsenkopf, die Materialdüse des Düsenkopfes mit dem ersten Düsenausgang an der Materialdüse, die Laserdüse des Düsenkopfes mit dem zweiten Düsenausgang an der Laserdüse, einen Lasererzeuger zur Erzeugung eines Laserstrahls für die Laserdüse und eine Materialzufuhr zur Zufuhr von Schweißmaterial als Fertigungsmaterial für die Materialdüse, wobei mittels des Düsenkopfes das Bauteil in additiver Fertigung gefertigt werden kann und die Materialdüse und die Laserdüse des Düsenkopfes mittels der Reinigungsvorrichtung von dem bei der additiven Fertigung des Bauteils erzeugbaren Fertigungsrückstand gereinigt werden kann.

Die Zufuhr des Schweißmaterials erfolgt von einem Materialbehälter. Die additive Fertigungsmaschine weist eine Steuerungseinheit auf, welche ausgebildet ist, die Reinigung des Düsenkopfes mittels der Reinigungsvorrichtung und die Fertigung des Bauteils zu steuern oder zu regeln.

Bei einer vorteilhaften Ausgestaltungsform der additiven Fertigungsmaschine ist an der Laserdüse eine erste Gaszufuhr ausgebildet, ist die Materialzufuhr der Materialdüse für eine zweite Gaszufuhr ausgebildet und ist mittels der ersten und zweiten Gaszufuhr insbesondere ein Schutzgas zuführbar.

Bei der additiven Fertigung des Bauteils mittels des Laser-Auftragsschweißens wird im Schweißvorgang der Lichtbogen und das Schmelzbad durch ein Schutzgas vor der Verbindung mit atmosphärischen Gasen, z.B. N2, O2 und H2 geschützt. Dadurch wird beispielsweise verhindert, dass das Schweißmaterial mit dem Luftsauerstoff reagiert oder Poren im Schmelzgut entstehen. Ist der Schutz vor den atmosphärischen Gasen ungenügend, können qualitative Mängel wie Anlauffarben, Rußablagerungen, Poren oder auch Beeinträchtigungen der Bauteilstruktur entstehen.

Auch kann das Gas, welches unter Druck in die Materialdüse eingeführt wird, einen Materialtransport des Schweißmaterials verbessern.

Für die Lösung der Aufgabe wird ebenfalls ein Reinigungsverfahren für die erfindungsgemäße Reinigungsvorrichtung vorgeschlagen, aufweisend den Schritt einer ersten Kopplung des Schwingungserzeugers über die Koppelfläche mit dem ersten Düsenausgang der Materialdüse des Düsenkopfes und, falls vorgesehen, mit dem zweiten Düsenausgang der Laserdüse des Düsenkopfes, den Schritt einer Schwingungsanregung des Düsenkopfes mittels der vom Schwingungserzeuger auf Basis der elektrischen Schwingung erzeugten mechanischen Schwingung, den Schritt einer Reinigung der Materialdüse und, falls vorgesehen, der Laserdüse über die an der Koppelfläche wirkende mechanische Schwingung von dem bei der additiven Fertigung des Bauteils erzeugten Fertigungsrückstand und den Schritt einer ersten Entkopplung des Schwingungserzeugers vom Düsenkopf auf.

Bei einer vorteilhaften Ausgestaltungsform des Reinigungsverfahren weist das Reinigungsverfahren den Schritt einer zweiten Kopplung der Reinigungsbürste über ihren Bürstenkopf mit dem ersten Düsenausgang der Materialdüse und, falls vorgesehen, mit dem zweiten Düsenausgang der Laserdüse des Düsenkopfes, den Schritt einer weiteren Reinigung des bei der additiven Fertigung des Bauteils erzeugten Fertigungsrückstands an der Materialdüse und, falls vorgesehen, an der Laserdüse des Düsenkopfes mittels der Reinigungsbürste und den Schritt einer zweiten Entkopplung der Reinigungsbürste vom Düsenkopf auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine erste schematische Darstellung der erfindungsgemäßen Reinigungsvorrichtung für einen Düsenkopf der erfindungsgemäßen additiven Fertigungsmaschine,
- FIG 2: eine zweite schematische Darstellung der Reinigungsvorrichtung für den Düsenkopf der additiven Fertigungsmaschine nach FIG 1,
- FIG 3: eine dritte schematische Darstellung der Reinigungsvorrichtung für den Düsenkopf der additiven Fertigungsmaschine nach FIG 1 und FIG 2 und
- FIG 4: ein Struktogramm des erfindungsgemäßen Reinigungsverfahrens für die Reinigungsvorrichtung nach FIG 1 bis 3.

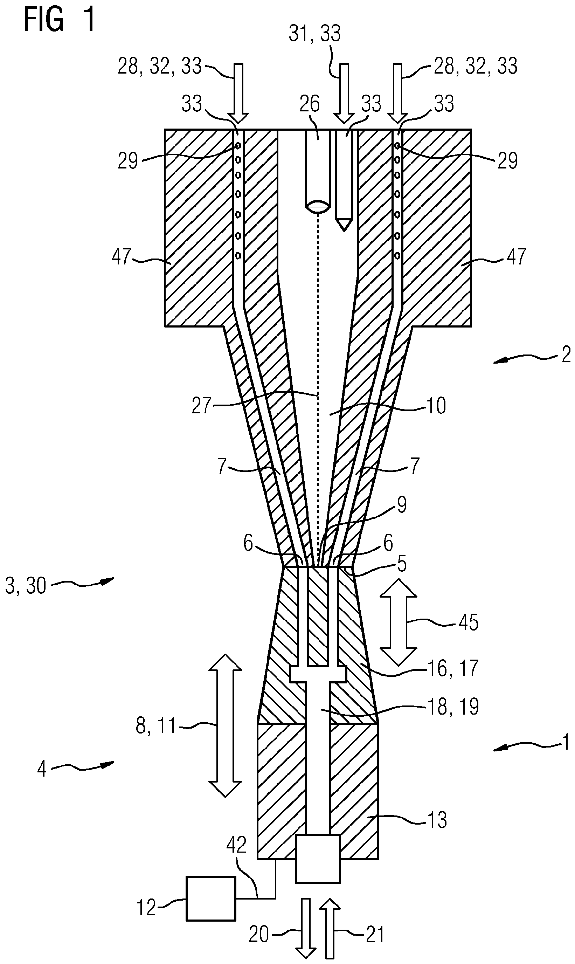

Die FIG 1 zeigt eine erste schematische Darstellung der erfindungsgemäßen Reinigungsvorrichtung 1 für einen Düsenkopf 2 der erfindungsgemäßen additiven Fertigungsmaschine 30.

Die Reinigungsvorrichtung 1 weist einen Schwingungserzeuger 4 mit einer Koppelfläche 5 auf. Mittels der Koppelfläche 5 ist der Schwingungserzeuger 4 über seine mechanische Koppeleinheit 16 mit einem ersten Düsenausgang 2 einer Materialdüse 7 des Düsenkopfes 2 und mit einem zweiten Düsenausgang 9 einer Laserdüse 10 des Düsenkopfes 2 gekoppelt.

Die Kopplung und eine Entkopplung des Schwingungserzeugers 4 zum Düsenkopf 2 erfolgt in einer ersten Koppelausrichtung 45.

Die Materialdüse 7 des Düsenkopfes 2 ist hier als Ringspaltdüse einteilig ausgebildet. Die Materialdüse kann jedoch in einem anderen Ausführungsbeispiel der Reinigungsvorrichtung auch mehrteilig ausgebildet sein.

Die Laserdüse 10 und die Materialdüse 7 sind von einem Düsenkopfgehäuse 47 des Düsenkopfes 2 umfasst.

Ein Laserstrahl 27 wird für die Laserdüse 10 von einem Laserstrahlerzeuger 26 erzeugt, wobei in die Laserdüse 10 über eine erste Gaszufuhr 31 ein Schutzgas 33 eingeleitet wird.

In die Materialdüse 7 wird Schweißmaterial 29 über die Materialzufuhr 28 eingebracht, wobei die Materialzufuhr 28 auch als zweite Gaszufuhr 32 zur Einleitung des Schutzgases 33 ausgebildet ist.

Der Schwingungserzeuger 4 weist einen elektrischen Schwingungsgenerator 12 auf. Der elektrische Schwingungsgenerator 12 erzeugt mittels elektrischer Energie eine elektrische Schwingung, hier eine Ultraschallschwingung, welche via eines elektrisches Übertragungsmittels 42, beispielsweise einer elektrischen Leitung, zu einem Schwingungskonverter 13 übertragen wird.

Der Schwingungskonverter 13 wandelt die elektrische Schwingung in die mechanische Schwingung 8 um und überträgt sie weiter an die mechanische Koppeleinheit 16, welche als Sonotrode 17 ausgebildet ist.

Mittels des Schwingungserzeugers 4, über die Koppelfläche 5 an der mechanische Koppeleinheit 16 (an der Sonotrode 17), wird der Düsenkopf 2 auf Basis der elektrischen Schwingung in eine mechanische Schwingung 8, hier die Ultraschallschwingung 11 versetzt.

Über die Koppelfläche 5, welche mit einem ersten Düsenausgang 2 einer Materialdüse 7 des Düsenkopfes 2 und mit einem zweiten Düsenausgang 9 einer Laserdüse 10 des Düsenkopfes 2 gekoppelt ist, wird die mechanische Schwingung 8 an den Düsenkopf 2 übertragen, so dass die Materialdüse 7 und die Laserdüse 10 von einem bei der additiven Fertigung des Bauteils durch das Schweißmaterial 29 erzeugten Fertigungsrückstand während eines Reinigungsverfahrens 30 gereinigt wird.

Die mechanische Schwingung 8 erzeugt dabei ein Losbrechmoment für den Fertigungsrückstand, wobei sich der Fertigungsrückstand von der Materialdüse 7 und der Laserdüse 10 löst.

Der Schwingungserzeuger 4 weist eine erste Absaugvorrichtung 18 zum ersten Absaugen 20 und eine erste Ausblasvorrichtung 19 zum ersten Ausblasen 21 auf, mittels der der gelöste Fertigungsrückstand von dem ersten Düsenausgang 6 der Materialdüse 7 und dem zweiten Düsenausgang 9 der Laserdüse 10 und natürlich auch von innerhalb der Materialdüse 7 und der Laserdüse 10 des Düsenkopfes 2 abgeführt wird.

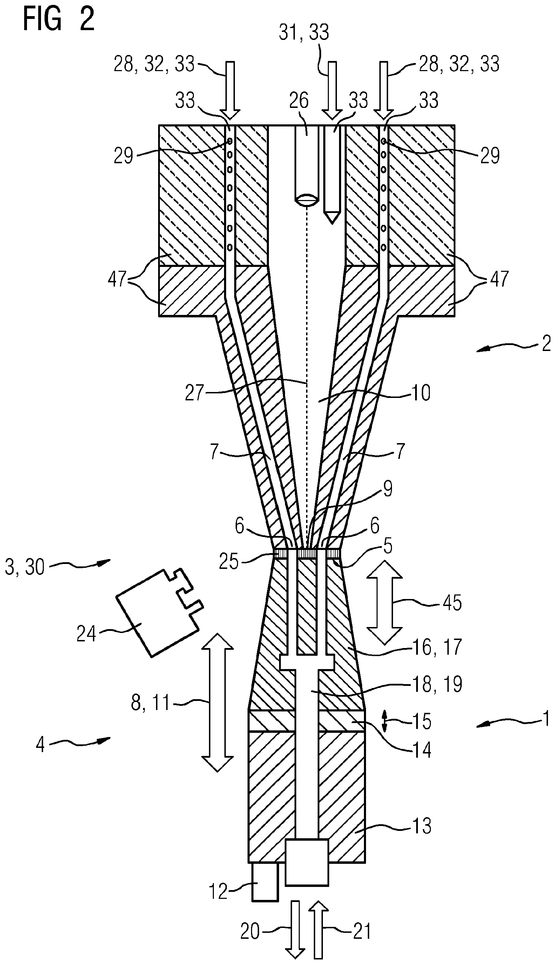

In der FIG 2 wird eine zweite schematische Darstellung der Reinigungsvorrichtung 1 für den Düsenkopf 2 der additiven Fertigungsmaschine nach FIG 1 aufgezeigt.

Im Gegensatz zum Ausführungsbeispiel der FIG 1 weist der Schwingungserzeuger 4 einen mechanischen Schwingungstransformator 14 auf, welcher die vom Schwingungskonverter 13 erzeugte mechanische Schwingung 8 in ihrer Schwingungsamplitude 15 verändern kann.

Die so in ihrer Schwingungsamplitude 15 veränderbare mechanische Schwingung 8 wird über die mechanische Koppeleinheit 16, hier die Sonotrode 17, an den Düsenkopf 2 übertragen.

Der elektrischer Schwingungsgenerator 12 ist in diesem Ausführungsbeispiel der FIG 2 im Wesentlichen unmittelbar am Schwingungskonverter 13 angeordnet.

An der Koppelfläche 5 des Schwingungserzeugers 4 weist die Koppeleinheit 16 einen Koppelpuffer 25 auf, wobei die Koppelfläche 5 über den Koppelpuffer 25 mit dem ersten Düsenausgang 6 der Materialdüse 7 des Düsenkopfes 2 und mit dem zweiten Düsenausgang 9 der Laserdüse 10 des Düsenkopfes 2 gekoppelt ist.

Das Düsengehäuse 47 des Düsenkopfes 2 kann zumindest teilweise transparent ausgeführt sein, so dass eine eventuelle Verstopfung der Materialdüse 7 durch das Schmelzmaterial 29 oder das Auftreten des Fertigungsrückstands innerhalb der Materialdüse 7 auch visuell erfassbar ist. Dies gilt für den Fertigungsrückstand analog auch bei der Laserdüse 10.

Die Reinigungsvorrichtung 1 umfasst auch eine Überwachungsvorrichtung 24 zur Überwachung der Reinigung des Düsenkopfes 2.

Mittels der Überwachungsvorrichtung 24 kann insbesondere eine Anhaftung des Fertigungsrückstands am Düsenkopf 2 aber auch eine Verstopfung der Materialdüse 7 oder der Laserdüse 10 mit dem Fertigungsrückstand detektiert und somit ein Bedarf für die Reinigung des Düsenkopfes 2 evaluiert werden.

Bei einer dritten schematischen Darstellung wird die Reinigungsvorrichtung 1 für den Düsenkopf 2 der additiven Fertigungsmaschine 30 nach FIG 1 und FIG 2 visualisiert.

Im Gegensatz zum Ausführungsbeispiel der FIG 1 oder FIG 2 ist in diesem Ausführungsbeispiel eine Reinigungsbürste 22 über ihren beweglichen Bürstenkopf 23 mit dem Düsenkopf 2, also mit dem ersten Düsenausgang 2 der Materialdüse 7 des Düsenkopfes 2 und mit dem zweiten Düsenausgang 9 der Laserdüse 10 des Düsenkopfes 2, gekoppelt.

Die Kopplung und eine Ankopplung der Reinigungsbürste 22 erfolgt in einer zweiten Koppelausrichtung 46.

Zum Entfernen des Fertigungsrückstands wird der Bürstenkopf 23 der Reinigungsbürste 22 in eine rotierende Bewegung versetzt. Der Fertigungsrückstand am Düsenkopf 2 wird dabei mittels mechanischer Reibung entfernt.

Die Reinigungsbürste 22 weist eine zweite Absaugvorrichtung 43 zum zweiten Absaugen 48 und eine zweite Ausblasvorrichtung 44 zum zweiten Ausblasen 49 auf, mittels der der gelöste Fertigungsrückstand von dem ersten Düsenausgang 6 der Materialdüse 7 und dem zweiten Düsenausgang 9 der Laserdüse 10 und natürlich auch von innerhalb der Materialdüse 7 und der Laserdüse 10 des Düsenkopfes 2 abgeführt wird.

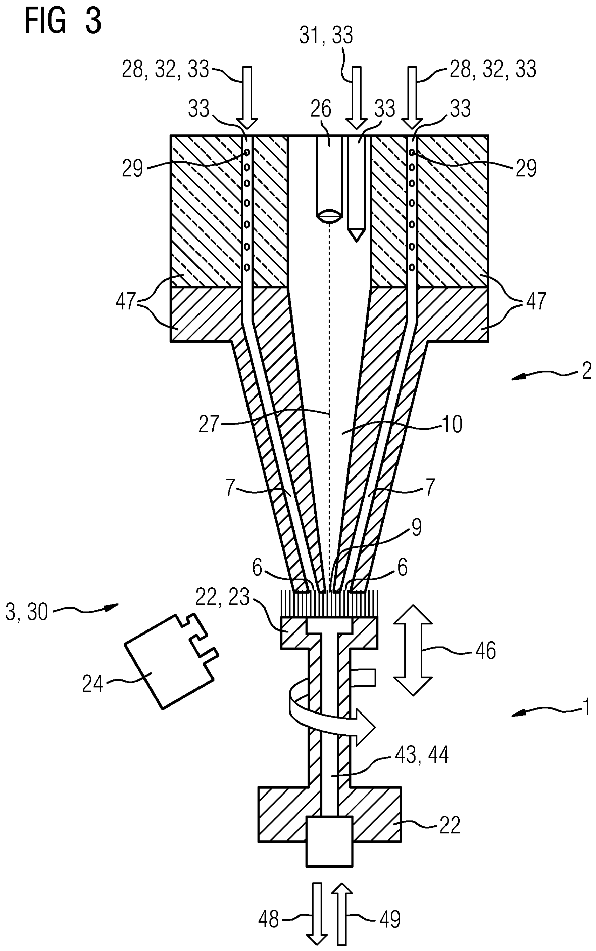

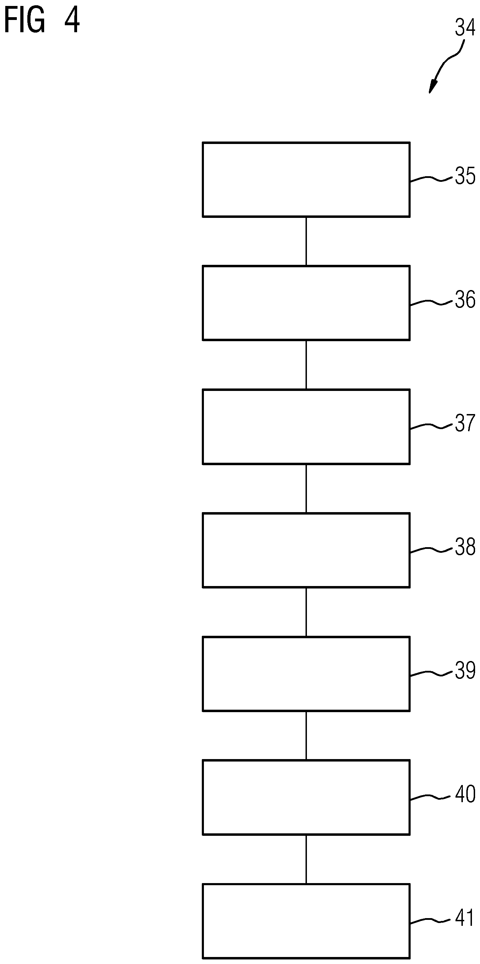

Die FIG 4 zeigt ein Struktogramm des erfindungsgemäßen Reinigungsverfahrens 34 für die Reinigungsvorrichtung nach FIG 1 bis 3.

In einem Schritt einer ersten Kopplung 35 wird der Schwingungserzeuger über die Koppelfläche mit dem ersten Düsenausgang der Materialdüse des Düsenkopfes und, falls vorgesehen, mit dem zweiten Düsenausgang der Laserdüse des Düsenkopfes gekoppelt.

In einem Schritt einer Schwingungsanregung 36 wird der Düsenkopf mittels der vom Schwingungserzeuger auf Basis der elektrischen Schwingung erzeugten mechanischen Schwingung angeregt.

In einem Schritt einer Reinigung 37 wird die Materialdüse und, falls vorgesehen, die Laserdüse über die an der Koppelfläche wirkende mechanische Schwingung von dem bei der additiven Fertigung des Bauteils erzeugten Fertigungsrückstand gereinigt.

In einem Schritt einer ersten Entkopplung 38 wird der Schwingungserzeuger vom Düsenkopf entkoppelt.

In einem Schritt einer zweiten Kopplung 39 wird die Reinigungsbürste über ihren Bürstenkopf mit dem ersten Düsenausgang der Materialdüse und, falls vorgesehen, mit dem zweiten Düsenausgang der Laserdüse des Düsenkopfes gekoppelt.

In einem Schritt einer weiteren Reinigung 40 wird der bei der additiven Fertigung des Bauteils erzeugte Fertigungsrückstand an der Materialdüse und, falls vorgesehen, an der Laserdüse des Düsenkopfes mittels der Reinigungsbürste gereinigt.

In einem Schritt einer zweiten Entkopplung 41 wird die Reinigungsbürste vom Düsenkopf entkoppelt.

## Patentansprüche

1. Reinigungsvorrichtung (1) zur Reinigung eines Düsenkopfes (2) für eine additive Fertigung eines Bauteils mittels Laser-Auftragsschweißen (3), mit einem Schwingungserzeuger (4), wobei
- der Schwingungserzeuger (4) eine Koppelfläche (5) aufweist und mittels der Koppelfläche (5) mit einem ersten Düsenausgang (6) einer Materialdüse (7) des Düsenkopfes (2) koppelbar ist,
- mittels des Schwingungserzeugers (4) der Düsenkopf (2) auf Basis einer elektrischen Schwingung in eine mechanische Schwingung (8) versetzbar ist und
- der Düsenkopf (2) mit der Materialdüse (7) mittels der mechanischen Schwingung (8) von einem bei der additiven Fertigung des Bauteils erzeugbaren Fertigungsrückstand gereinigt werden kann.

2. Reinigungsvorrichtung (1) nach Anspruch 1, wobei der Schwingungserzeuger (4) mittels der Koppelfläche (5) mit einem zweiten Düsenausgang (9) einer Laserdüse (10) des Düsenkopfes (2) koppelbar ist und der Düsenkopf (2) mit der Laserdüse (10) mittels der mechanischen Schwingung (8) von dem bei der additiven Fertigung des Bauteils erzeugbaren Fertigungsrückstand gereinigt werden kann.

3. Reinigungsvorrichtung (1) nach einem der Ansprüche 1 oder 2, wobei die elektrische Schwingung und die mechanische Schwingung (8) vom Schwingungserzeuger (4) als Ultraschallschwingungen (11) insbesondere in einem Frequenzbereich von 15kHz bis 60kHz erzeugbar sind.

4. Reinigungsvorrichtung (1) nach einem der vorhergehenden Ansprüche, wobei der Schwingungserzeuger (4) einen elektrischen Schwingungsgenerator (12) zur Erzeugung der elektrischen Schwingung und einen Schwingungskonverter (13) zur Umwandlung der elektrischen Schwingung in die mechanische Schwingung (8) aufweist.

5. Reinigungsvorrichtung (1) nach einem der vorhergehenden Ansprüche, wobei der Schwingungserzeuger (4) einen mechanischen Schwingungstransformator (14) zur Veränderung einer Schwingungsamplitude (15) der mechanischen Schwingung (8) insbesondere für einen Amplitudenbereich von lpm bis 40pm aufweist.

6. Reinigungsvorrichtung (1) nach einem der vorhergehenden Ansprüche, wobei der Schwingungserzeuger (4) eine mechanische Koppeleinheit (16) aufweist und wobei die mechanische Koppeleinheit (15) ausgebildet ist, an der Koppelfläche (5) die mechanische Schwingung (8) von dem Schwingungskonverter (13) und, falls vorhanden, über den mechanischen Schwingungstransformator (12) an den ersten Düsenausgang (6) der Materialdüse (7) des Düsenkopfes (2) und, falls vorhanden, an den zweiten Düsenausgang (9) der Laserdüse (10) des Düsenkopfes (2) zu übertragen.

7. Reinigungsvorrichtung (1) nach Anspruch 6, wobei die mechanische Koppeleinheit (16) als eine Sonotrode (17) ausgebildet ist.

8. Reinigungsvorrichtung (1) nach einem der vorhergehenden Ansprüche, wobei
- der Schwingungserzeuger (4) eine erste Absaugvorrichtung (18) und/oder eine erste Ausblasvorrichtung (19) aufweist,
- die erste Absaugvorrichtung (18) und/oder die erste Ausblasvorrichtung (19) über die Koppelfläche (5) mit dem ersten Düsenausgang (6) der Materialdüse (7) koppelbar ist,
- die erste Absaugvorrichtung (18) zum Absaugen (20) des bei der additiven Fertigung des Bauteils erzeugbaren Fertigungsrückstands an der Materialdüse (7) ausgebildet ist und
- die erste Ausblasvorrichtung (18) zum Ausblasen (21) des bei der additiven Fertigung des Bauteils erzeugbaren Fertigungsrückstands an der Materialdüse (7) ausgebildet ist.

9. Reinigungsvorrichtung (1) nach einem der vorhergehenden Ansprüche, aufweisend eine Reinigungsbürste (22) mit einem antreibbaren Bürstenkopf (23), wobei der Bürstenkopf (23) derart ausgebildet ist, mittels mechanischer Reibung den bei der additiven Fertigung des Bauteils erzeugbaren Fertigungsrückstand am ersten Düsenausgang (6) der Materialdüse (7) und, falls vorhanden, am zweiten Düsenausgang (9) der Laserdüse (10) des Düsenkopfes (2) zu reinigen.

10. Reinigungsvorrichtung (1) nach einem der vorhergehenden Ansprüche, aufweisend eine Überwachungsvorrichtung (24) zur Überwachung der Reinigung des Düsenkopfes (2).

11. Reinigungsvorrichtung (1) nach einem der vorhergehenden Ansprüche, wobei der Schwingungserzeugers (4) an der Koppelfläche (5) einen Koppelpuffer (25) aufweist und wobei die Koppelfläche (5) über den Koppelpuffer (25) mit dem ersten Düsenausgang (6) der Materialdüse (7) des Düsenkopfes (2) und, falls vorhanden, mit dem zweiten Düsenausgang (9) der Laserdüse (10) des Düsenkopfes (2) koppelbar ist.

12. Additive Fertigungsmaschine (30) zur additiven Fertigung eines Bauteils mittels Laser-Auftragsschweißen (3) mit einer Reinigungsvorrichtung (1) nach einem der Ansprüche 1 bis 11, aufweisend
- den Düsenkopf (2)
- die Materialdüse (7) des Düsenkopfes (2) mit dem ersten Düsenausgang (6) an der Materialdüse (7),
- die Laserdüse (10) des Düsenkopfes (2) mit dem zweiten Düsenausgang (9) an der Laserdüse (10),
- einen Lasererzeuger (26) zur Erzeugung eines Laserstrahls (27) für die Laserdüse (10) und
- eine Materialzufuhr (28) zur Zufuhr von Schweißmaterial (29) als Fertigungsmaterial für die Materialdüse (7),
wobei
- mittels des Düsenkopfes (2) das Bauteil in additiver Fertigung gefertigt werden kann und
- die Materialdüse (7) und die Laserdüse (10) des Düsenkopfes (2) mittels der Reinigungsvorrichtung (1) von dem bei der additiven Fertigung des Bauteils erzeugbaren Fertigungsrückstand gereinigt werden kann.

13. Additive Fertigungsmaschine (30) nach Anspruch 12, wobei
- an der Laserdüse (10) eine erste Gaszufuhr (31) ausgebildet ist,
- die Materialzufuhr (28) der Materialdüse (7) für eine zweite Gaszufuhr (32) ausgebildet ist und
- mittels der ersten und zweiten Gaszufuhr (31, 32) insbesondere ein Schutzgas (33) zuführbar ist.

14. Reinigungsverfahren (34) für eine Reinigungsvorrichtung (1) nach einem der Ansprüche 1 bis 11, aufweisend die Schritte
- einer ersten Kopplung (35) des Schwingungserzeuger (4) über die Koppelfläche (5) mit dem ersten Düsenausgang (6) der Materialdüse (7) des Düsenkopfes (2) und, falls vorgesehen, mit dem zweiten Düsenausgang (9) der Laserdüse (10) des Düsenkopfes (2),
- einer Schwingungsanregung (36) des Düsenkopfes (2) mittels der vom Schwingungserzeuger (4) auf Basis der elektrischen Schwingung erzeugten mechanischen Schwingung (8),
- einer Reinigung (37) der Materialdüse (7) und, falls vorgesehen, der Laserdüse (10) über die an der Koppelfläche (5) wirkende mechanische Schwingung (8) von dem bei der additiven Fertigung des Bauteils erzeugten Fertigungsrückstand und
- einer ersten Entkopplung (38) des Schwingungserzeugers (4) vom Düsenkopf (2).

15. Reinigungsverfahren (34) nach Anspruch 14, aufweisend die Schritte
- einer zweiten Kopplung (39) der Reinigungsbürste (22) über ihren Bürstenkopf (23) mit dem ersten Düsenausgang (6) der Materialdüse (7) und, falls vorgesehen, mit dem zweiten Düsenausgang (9) der Laserdüse (10) des Düsenkopfes (2),
- einer weiteren Reinigung (40) des bei der additiven Fertigung des Bauteils erzeugten Fertigungsrückstands an der Materialdüse (7) und, falls vorgesehen, an der Laserdüse (10) des Düsenkopfes (2) mittels der Reinigungsbürste (22) und
- einer zweiten Entkopplung (41) der Reinigungsbürste (22) vom Düsenkopf (2).
